Europäisches Patentamt

European Patent Office

Office européen des brevets

(19)

(11) Numéro de publication : **0 467 780 A1**

# (12) DEMANDE DE BREVET EUROPEEN

(21) Numéro de dépôt : **91401992.2**

(22) Date de dépôt : **17.07.91**

(51) Int. Cl.$^5$ : **G01N 23/18,** G01N 23/04

(30) Priorité : **18.07.90 FR 9009141**

(43) Date de publication de la demande :
**22.01.92 Bulletin 92/04**

(84) Etats contractants désignés :
**DE FR GB**

(71) Demandeur : **SOCIETE NATIONALE D'ETUDE
ET DE CONSTRUCTION DE MOTEURS
D'AVIATION, "S.N.E.C.M.A."
2, Boulevard du Général Martial Valin
F-75015 Paris (FR)**

(72) Inventeur : **Cornu, Michel Léon Pédro
10, chemin de Saint Jean
F-77130 Montereau (FR)**
Inventeur : **Krempel, Claude Jean
231, rue de Crespy
F-77000 Vaux Le Penil (FR)**

(74) Mandataire : **Berrou, Paul et al
S.N.E.C.M.A. Service des Brevets Boîte
Postale 81
F-91003 Evry Cedex (FR)**

(54) **Appareil de contrôle non destructif par un rayonnement, comportant une visée laser.**

(57)    Appareil de contrôle comprenant un émetteur de rayonnement (7) tel que les rayons X. On ajoute un émetteur (17) d'un rayon lumineux (D) parallèle au bras (3). Un miroir (18) oblique est placé dans le faisceau de rayonnement (E) pour réfléchir le rayon lumineux et le rendre parallèle au rayonnement de contrôle. On dispose ainsi d'un repérage de la partie contrôlée au moyen d'une caméra (10) placée obliquement sur un bras (3) sans devoir rapprocher l'émetteur (17) volumineux des pièces strictement nécessaires au contrôle. Comme d'autre part le miroir (18) est transparent au rayonnement, l'efficacité n'est pas diminuée.
    L'invention est particulièrement utile pour le contrôle de soudures dans des alésages étroits.

EP 0 467 780 A1

FIG. 1

La présente invention concerne un appareil de contrôle non destructif par un rayonnement, par exemple X ou gamma, comportant une visée laser.

De tels appareils comprennent essentiellement un émetteur du rayonnement vers la pièce à contrôler et un moyen de prise d'images de la pièce, tel que des films photographiques. Afin de repérer facilement la direction du faisceau de rayonnement et de vérifier que l'image recueillie concerne bien la partie irradiée de la pièce, on incorpore fréquemment à l'appareil un appareil de visée constitué par un émetteur d'un rayon lumineux inclus temporairement dans le faisceau de rayonnement et qui fournit un point de repère à l'observation par son interférence avec la pièce. Cette façon de procéder entraîne toutefois deux inconvénients : l'émetteur du rayon lumineux est encombrant, et il fait obstacle par sa présence à l'émission du rayonnement de contrôle.

Il faut donc recourir au démontage de l'émetteur du rayon lumineux après la phase de réglage de visée sur la partie de la pièce à contrôler, ce qui n'est guère possible si l'appareil a été introduit à l'intérieur de certaines pièces telles que des alésages de petit diamètre. L'émetteur du rayon lumineux peut d'ailleurs empêcher l'introduction de l'appareil dans de tels alésages.

L'invention permet de supprimer ces deux inconvénients. L'émetteur du rayon lumineux est à l'écart du faisceau du rayonnement de contrôle, quoique le rayon lumineux soit émis dans le faisceau et favorablement dans l'axe de celui-ci. Il est donc inutile de démonter l'émetteur du rayon lumineux, et on dispose du rayon lumineux au moment des prises d'images. Une très bonne précision de la position du rayon lumineux peut par ailleurs être obtenue. Enfin, l'appareil peut être utilisé sans problème pour l'inspection ou le contrôle dans de très petits volumes.

L'appareil est caractérisé en ce qu'il comprend un bras portant l'émetteur du rayonnement de contrôle, le rayonnement étant émis en un faisceau sensiblement perpendiculaire au bras, un émetteur d'un rayon lumineux éloigné de l'émetteur du rayonnement, ledit rayon étant transmis par fibre optique le long du bras jusqu'à un terminal qui envoie le rayon sur un miroir de réflexion dudit rayon dans une direction appartenant au faisceau, le miroir étant situé dans le faisceau et transparent au rayonnement, et un second moyen de prise d'images des pièces visées par le rayon lumineux. Avantageusement, le second moyen de prise d'images est constitué par une caméra portée tangentiellement par le bras dans le plan transversal contenant le faisceau du rayonnement, et apte à viser l'impact du rayon lumineux sur la pièce.

Une plus grande souplesse d'utilisation est offerte si le miroir est fixé sur une plaque qui est installée de manière démontable sur le bras, éventuellement grâce à des perçages en arc de cercle recevant des vis de fixation et qui permettent le réglage de la position angulaire du miroir. On peut alors en effet remplacer le miroir temporairement par une lunette de visée pour le rayon lumineux ou par un détecteur d'horizontalité du bras.

L'invention va maintenant être décrite à l'aide des figures suivantes :

– la figure 1 représente une vue d'ensemble de l'appareillage ;
– la figure 2 représente un détail de l'appareil ;
– la figure 3 représente le dispositif à miroir qui réfléchit le rayon lumineux ;
– les figures 4 et 5 représentent les dispositifs de contrôle d'horizontalité du bras et la lunette de visée installés sur l'appareil ; et
– les figures 6a et 6b représentent des fenêtres de mise en forme du faisceau de rayonnement.

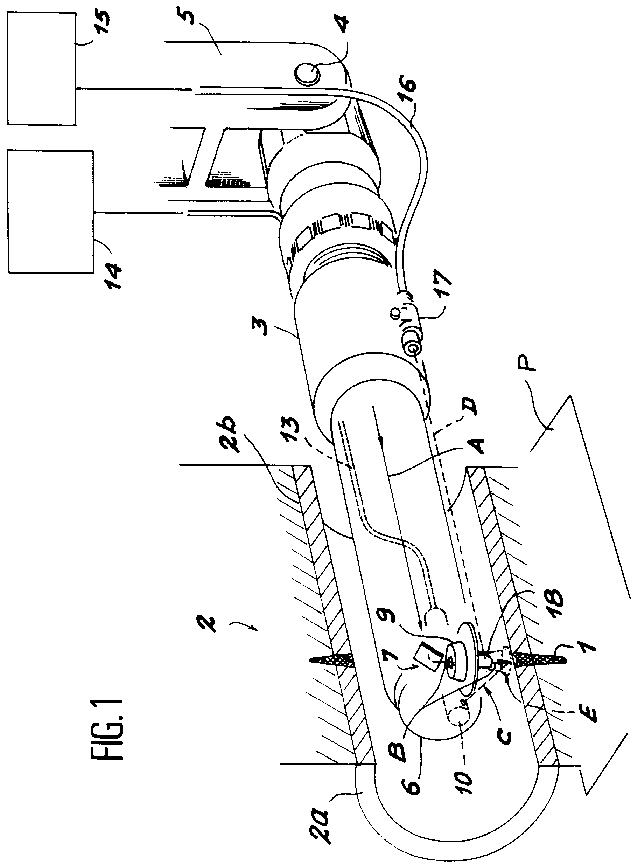

On se reporte tout d'abord à la figure 1. La pièce à contrôler peut par exemple être une soudure 1 circulaire de deux éléments 2a et 2b cylindriques en prolongement d'un tube 2 de petit diamètre. L'appareil de contrôle comprend un bras 3 tubulaire articulé à une extrémité 4 sur un support 5 et dont l'autre extrémité ou extrémité libre 6 est enfoncée dans le tube 2 devant la soudure 1. L'extrémité libre 6 contient un émetteur de rayons X 7, ici une anticathode inclinée à 45° par rapport à l'axe du bras A par lequel est envoyé un faisceau d'électrons. Un faisceau E conique de rayons X est donc émis autour d'un axe d'émission B perpendiculaire à l'axe du bras A et en direction radiale dans le tube 2. Un tronc de cône 9 en plomb muni d'un filtre est disposé autour de l'axe d'émission B à l'intérieur du tube 3 de manière à focaliser le faisceau de rayonnement émis vers la soudure 1. Un film ou une plaque photographique P est disposé extérieurement au tube 2 pour réaliser le cliché radiographique de la zone à contrôler.

Pour vérifier le positionnement correct du faisceau d'électrons par rapport à la zone de la pièce à contrôler, une caméra 10 est par ailleurs fixée extérieurement au bras 3 et prend des images de contrôle suivant une direction de visée C dirigée obliquement par rapport à l'axe d'émission B vers la partie irradiée de la soudure 1. Un câble de transmission 13 s'étendant le long du tube 3 et du support 5 permet de recueillir les images de la caméra 10 sur un écran 14.

On dispose d'un laser 15 pour produire un rayon lumineux qui parcourt une fibre optique 16 et arrive à un terminal 17 qui constitue un émetteur de rayon lumineux D. Les terminaux 17 sont disponibles dans le commerce. Les inventeurs envisagent d'utiliser celui qui est vendu sous la référence NZ 44 FO1 par la société A2J (Fontenay sous Bois, France).

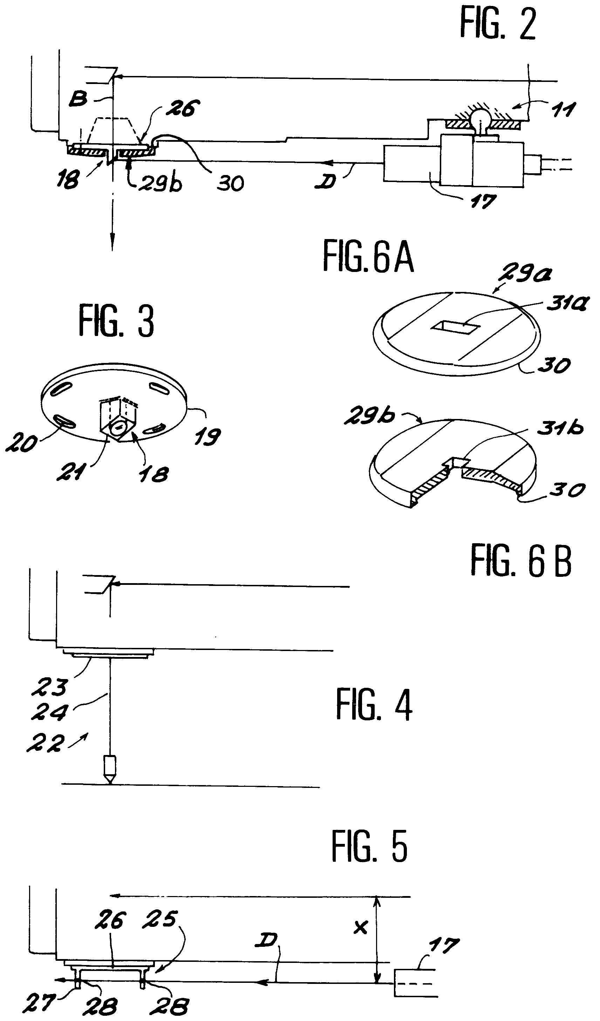

Le terminal 17 est assujetti au bras 3 par une liaison comportant essentiellement une rotule ou une plaque 11 comportant un moyen de réglage en rotation et basculement, qui permet de régler la direction du rayon lumineux émis D (figure 2). Le terminal 17 est éloigné de l'extrémité libre 6 et reste à l'extérieur du tube 2. Il n'empêche donc pas d'y introduire le bras 3. L'axe d'émission du rayon lumineux D s'étend le long du bras 3 et arrive dans le faisceau E d'émission du rayonnement. Il est à cet endroit intercepté par un miroir 18 incliné à 45° qui lui impose un changement de direction à angle droit de manière à le diriger suivant l'axe d'émission B du faisceau E, en direction de la soudure 1. Le rayon lumineux offre donc une possibilité de repérage rapide de la position du faisceau E et en particulier de la zone à contrôler qu'il irradie. On voit sur la figure 3 que le miroir 18 est fixé sur une plaque 19 qui peut être installée de manière démontable sur le bras 3. Pour cela, elle est munie de quatre orifices en arc de cercle 20 autour du miroir 18, par lesquels des vis de fixation au bras 3 sont introduites. La forme en arc de cercle permet de régler le miroir 18 en rotation autour de l'axe d'émission B et donc d'orienter correctement la partie réfléchie du rayon lumineux.

La plaque 19 et la structure du miroir 18 sont en Plexiglas. La partie réfléchissante du miroir 18 est une couche d'argent. L'ensemble est pratiquement transparent aux rayons X et ne perturbe donc pas le contrôle.

Un miroir 18 démontable offre certains avantages. bien qu'il ne soit pas démonté lors des visées. Il peut en effet être remplacé, au cours d'une étape préliminaire représentée figure 4 et correspondant à un réglage de la position du bras 3, par un détecteur d'horizontalité 22 constitué d'une plaque perforée 23 qui peut être vissée au bras à l'emplacement de la plaque 19 du miroir 18 et qui porte un fil à plomb 24. La position angulaire du bras 3 est ajustée en examinant la position du fil à plomb 24 par rapport à une épure de calibration.

Le miroir 18 peut également être remplacé par une lunette de visée 25 représentée figure 5 et constituée d'une plaque 26 de fixation au bras 3 semblable à la plaque 22 précédente et qui porte deux cibles 27 parallèles et munies chacune d'un orifice 28, les orifices 28 étant en prolongement. En tournant la rotule 11, on s'efforce de faire passer le rayon lumineux émis par les deux orifices 28. Quand c'est le cas, le terminal 17 est maintenu en place et le miroir 18 peut être monté à la place de la lunette de visée 25.

Pour affiner le contrôle radiographique, des fenêtres de focalisation du rayonnement X ou gamma 29a ou 29b (figures 6A et 6B) peuvent être montées sur l'appareil. Dans la réalisation représentée, elles consistent en des disques portant une collerette 30 sur l'une de leurs faces. La collerette 30 est utilisée pour réaliser un emboîtement des fenêtres 29a ou 29b autour de la plaque 19. Une ouverture 31a ou 31b permet de régler l'ouverture du faisceau E. Le miroir 18 dépasse de l'ouverture 31a ou 31b si bien que la propagation du rayon lumineux n'est pas entravée, comme on le représente sur la figure 2.

L'ouverture 31a ou 31b est choisie en fonction des conditions concrètes d'une succession de prises d'images qui constitue ce qu'on appelle un contrôle dynamique d'une pièce. Dans le cas représenté, le tube 2 est mis en rotation autour de son axe par pas angulaires égaux et une image est prise à chaque pas de rotation. Le choix judicieux d'une fenêtre permet d'obtenir des images sans chevauchements de portions successives de la soudure circulaire 1.

La structure de visée laser selon l'invention a pour avantage son faible encombrement qui permet l'utilisation du bras, sans démontage de la visée, à l'intérieur d'alésages de faible diamètre, tout en évitant les erreurs de parallaxe entre visée laser et faisceau de contrôle X, les axes des deux faisceaux restant à demeure confondus.

## Revendications

1. Appareil de contrôle de pièces par un rayonnement X ou gamma comprenant un émetteur (7) du rayonnement X ou gamma, un premier moyen de prise d'images des pièces traversées par le rayonnement, caractérisé en ce qu'il comprend un bras (3) portant l'émetteur du rayonnement (7), le rayonnement étant émis en un faisceau (E) sensiblement perpendiculaire au bras (3), un émetteur (15) d'un rayon lumineux, ledit émetteur (15) étant éloigné de l'émetteur du rayonnement et le rayon lumineux étant transmis par fibre optique le long du bras (3) jusqu'à un terminal (17) qui envoie le rayon sur un miroir (18) de réflexion dudit rayon dans une direction (B) appartenant au faisceau (E), le miroir (18) étant situé dans le faisceau (E) et transparent au rayonnement, et un second moyen de prise d'images (10) des pièces visées par le rayon lumineux.

2. Appareil de contrôle par un rayonnement suivant la revendication 1, caractérisé en ce que le miroir (18) est fixé sur une plaque (19) qui est installée de manière démontable sur le bras (3).

3. Appareil de contrôle par un rayonnement suivant la revendication 2, caractérisé en ce que la plaque (19) du miroir (18) est munie de perçages (20) en arc de cercle recevant des vis de fixation au bras (3) et permettant le réglage de la position angulaire du miroir (18).

4. Appareil de contrôle par un rayonnement suivant l'une quelconque des revendications 1 à 3, caractérisé en ce qu'il comprend des fenêtres de réglage d'ouverture du faisceau (E) installées sur le bras autour du miroir.

5. Appareil de contrôle par un rayonnement suivant l'une quelconque des revendications 1 à 4, caractérisé en ce que le terminal (17) à fibre optique transmettant le rayon lumineux vers le miroir (18) est monté sur le bras (3) par une plaque (11) comportant un moyen de réglage en rotation et basculement.

6. Appareil de contrôle par un rayonnement suivant l'une quelconque des revendications 1 à 5, caractérisé en ce que le second moyen de prise d'images est constitué par une caméra (10) portée tangentiellement par le bras (3) et apte à viser l'impact du rayon lumineux sur la pièce.

7. Appareil de contrôle par un rayonnement suivant l'une quelconque des revendications 2 à 6, caractérisé en ce qu'il comprend une lunette de visée (25) pour le rayon lumineux, fixée sur une plaque (26) qui peut être installée de manière démontable sur le bras (3) à la place de la plaque (19) du miroir (18).

8. Appareil de contrôle par un rayonnement suivant l'une quelconque des revendications 2 à 7, caractérisé en ce qu'il comprend un dispositif de contrôle d'horizontalité (22) du bras (3) disposé sur une plaque (23) qui peut être installée de manière démontable sur le bras (3) à la place de la plaque (19) du miroir (18).

FIG.1

FIG. 2

FIG.6A

FIG. 3

FIG. 6 B

FIG. 4

FIG. 5

7

EP 0 467 780 A1

Office européen
des brevets

# RAPPORT DE RECHERCHE EUROPEENNE

Numero de la demande

EP 91 40 1992

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| | PATENT ABSTRACTS OF JAPAN vol. 006, no. 002 (P-096)8 Janvier 1982 & JP-A-56 126 751 (MITSUBISHI ELECTRIC CORP. ) 5 Octobre 1981 | | G01N23/18 G01N23/04 |
| X | * le document en entier * | 1 | |
| | MECHANICAL ENGINEERING vol. 106, no. 2, Février 1984, NEW YORK,US pages 34 - 37; J.FAGENBAUM: 'NDE: ITS ROLE IN NUCLEAR POWER ' | | |
| A | * EN ENTIER* | 1 | |
| | GB-A-2 109 660 (NORTHERN ENGINEERING INDUSTRIES) | | |
| A | * revendication 1 * | 1 | |
| | US-A-4 521 905 (Y. HOSOKAWA) | | |
| A | * revendication 1 * | 1 | |

DOMAINES TECHNIQUES RECHERCHES (Int. Cl.5)

G01N
G03B

Le présent rapport a été établi pour toutes les revendications

| Lieu de la recherche | Date d'achèvement de la recherche | Examinateur |
|---|---|---|
| LA HAYE | 11 OCTOBRE 1991 | VAN DEN BULCKE E.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

8